# EUROPÄISCHE PATENTANMELDUNG

(11) **EP 4 067 112 A1**
(43) Veröffentlichungstag der Anmeldung: **05.10.2022**
(21) Anmeldenummer: 21166705.0
(22) Anmeldetag: 01.04.2021
(51) Int. Cl.: B60C 1/00, C08K 3/04, C08K 3/22, C08K 3/30, C08K 3/32, C08K 3/36, C08K 5/18, C08K 5/40, C08K 5/46, C08K 5/5415, C08K 5/548, C08L 7/00, C09J 107/00

(54) **KAUTSCHUKMISCHUNGEN ENTHALTEND N, N' -DIALKYL-P-PHENYLENEDIAMINE**

(71) Anmelder: LANXESS Deutschland GmbH, 50569 Köln (DE)
(72) Erfinder: HALLE, Olaf, 51061 Köln (DE); WEIDENHAUPT, Hermann-Josef, 50259 Pulheim (DE); SCHNEIDER, Achim, 97082 Würzburg (DE); WIEDEMEIER-JARAD, Melanie, 41540 Dormagen (DE)

(57) **Zusammenfassung**

Die neuen Kautschukmischungen auf Basis von Naturkautschuk und N,N'-Dicyclohexyl-p-phenylendiamin eignen sich hervorragend zur Herstellung von Kautschukvulkanisaten und daraus erhältlichen Formkörpern, insbesondere Reifen, Teile von Reifen oder technische Gummiartikeln mit verbesserten anwendungstechnischen Eigenschaften.

## Beschreibung

Die vorliegende Erfindung betrifft neue Kautschukmischungen auf Basis von Naturkautschuk und N,N'-Dicyclohexyl-p-phenylendiamin, Verfahren zu deren Herstellung und deren Verwendung zur Herstellung von Kautschukvulkanisaten nach dem Vulkanisationsverfahren und daraus erhältlichen Formkörpern, insbesondere Reifen, Teile von Reifen oder technische Gummiartikeln sowie die Verwendung von N,N'-Dicyclohexyl-p-phenylendiamin als Alterungsschutzmittel für Kautschukmischungen und Kautschukvulkanisate auf Basis von Naturkautschuk.

Mit der Erfindung der Vulkanisation von Natur- sowie Synthesekautschuks wurden neue Werkstoff geschaffen, dessen einzigartiges Eigenschaftsprofil wesentlich zur Entwicklung der modernen Technik beigetragen hat.

Allerdings enthalten Naturkautschuk und synthetische Dienkautschuke Doppelbindungen. Gerade deren reaktiven Zentren in Allylstellung begünstigen die Reaktion mit Oxidationsmitteln wie Ozon oder Sauerstoff. Bei der sogenannten Alterung, zum Beispiel durch Kontakt mit Sauerstoff, wird das gesamte Volumen des Gummiartikels oxidiert, was mit einer Verhärtung, Versprödung und Rissbildung an der Oberfläche des Artikels bis hin zur völligen Zerstörung des Artikels einhergehen kann.

Es ist daher gängige Praxis Kautschukvulkanisate durch Alterungsschutzmittel gegen zerstörende Umwelteinflüsse zu schützen. So sind z.B. zur Verbesserung der Sauerstoff-, Ozon-, Hitze- und Lagerstabilität von Kautschukvulkanisaten bekannte phenolische, aminische, schwefelhaltige oder phosphorhaltige Alterungsschutzmittel geeignet.

Zu den bekanntesten Alterungsschutzmitteln für Vulkanisate, sowohl aus Naturkautschuk als auch aus synthetischen Kautschuken, zählen Verbindungen aus der Klasse der N,N'-Dialkyl-p-phenylendiamine und der N-Aryl-N'-alkylphenylendiamine. Insbesondere zum Einsatz in Naturkautschuken haben sich das N-(1,3-Dimethylbutyl)-N'-phenyl-p-phenylendiamin (6PPD) und das N,N'-Bis(1,4-dimethyl)-pentyl-p-phenylendiamin (77PD) auf dem Markt etabliert.

Aus der US 3,304,285 ist bekannt, dass Vulkanisate auf Basis von SBR-Kautschuken mit einer synergistischen Mischung aus N,N'-Dicyclohexylphenylendiamin und bestimmten N-Phenyl-N'-alkylphenylendiaminen gegen den Einfluss von Ozon geschützt werden können.

Nachteilig an diesen bekannten Alterungsschutzmitteln ist deren hohe Flüchtigkeit bei der Vulkanisation der Kautschukmischungen.

Es bestand daher Bedarf an alternativen Alterungsschutzmitteln für Kautschukvulkanisate auf Naturkautschuk Basis, die über ein gutes Wirkungsspektrum verfügen und gleichzeitig eine verringerte Flüchtigkeit bei der Verarbeitung des Naturkautschuks aufweisen.

Aufgabe der vorliegenden Erfindung war es, ein alternatives Alterungsschutzmittel für Naturkautschuk bereit zu stellen, das die Nachteile des Standes der Technik überwindet.

Es wurde gefunden, dass N,N'-Dicyclohexyl-p-phenylendiamin hervorragend geeignet ist, Vulkanisate auf Basis von Naturkautschuken gegen Alterungsprozesse, bedingt durch die Einwirkung von Sauerstoff und Ozon, zu schützen.

Überraschenderweise zeichnen sich die mit N,N'-Dicyclohexyl-p-phenylendiamin geschützten Kautschukvulkanisate auch durch verbesserte anwendungstechnische Eigenschaften wie Zugfestigkeit und Bruchdehnung und eine schnellere Ausvulkanisation aus. Die Emission flüchtiger Bestandteile bei der Herstellung der Vulkanisate mit dem Alterungsschutzmittel N,N'-Dicyclohexyl-p-phenylendiamin ist deutlich verringert.

Im Folgenden steht die Einheit "phr" für Gewichtsteile bezogen auf 100 Gewichtsteile der Gesamtmenge an in der Kautschukmischung enthaltenem Kautschuk d.h. die Gesamtmenge an Naturkautschuk(en) und gegebenenfalls vorhandenen Synthesekautschuken

Gegenstand der vorliegenden Erfindung sind Kautschukmischungen enthaltend mindestens einen Naturkautschuk und N,N'-Dicyclohexyl-p-phenylendiamin.

Die erfindungsgemäßen Kautschukmischungen enthalten N,N'-Dicyclohexyl-p-phenylendiamin im allgemeinen in einer Menge von 0,5 bis 4,0, vorzugsweise von 0,5 bis 3,0 und besonders bevorzugt von 0,5 bis 2,5 phr.

Die erfindungsgemäßen Kautschukmischungen enthalten mindestens einen **Naturkautschuk.**

Naturkautschuk ist ein gummiartiger Stoff, der im Milchsaft (Latex) vieler verschiedener Kautschukpflanzen vorkommt. Es handelt es sich um ein Polymerisat aus dem Monomer Isopren (2-Methyl-1,3-butadien) mit einer fast einheitlichen *cis*-1,4-Verknüpfung. Die mittlere molare Masse des Naturkautschuks liegt bei etwa 500.000 bis 2 Millionen g.mol⁻¹ .

Naturkautschuk aus cis-1,4 Polyisopren wird hauptsächlich aus dem Saft der Rinde der Hevea basiliensis bzw. der Landolphia owariensis, aus dem mexikanischen Guayule-Strauch oder der russischen Löwenzahn-Pflanze (taraxacum koksaghyz) gewonnen. Des Weiteren gibt es das trans-1,4-Polyisopren. Es wird aus dem Palaquium-baum (Palaquium gutta) gewonnen.

Ebenfalls aus trans-1,4-Polyisopren besteht Balata, das einen hohen Harzanteil aufweist und aus dem Balatabaum (Manilkara bidentata) gewonnen wird.

Erfindungsgemäß können alle Arten von Naturkautschuk oder deren Mischungen eingesetzt werden. Bevorzugte Naturkautschuke sind z.B. technisch spezifizierter Naturkautschuk (TSR), wie beispielsweise Standard Malaysian rubber (SMR) und "Ribbed Smoked Sheets" (RSS).

In einer alternativen Ausführungsform enthalten die erfindungsgemäßen Kautschukmischungen außer den Naturkautschuken noch einen oder mehrere **Synthesekautschuke.**

Bevorzugte polare und unpolare Synthesekautschuke sind beispielsweise
BR - Polybutadien
ABR - Butadien/Acrylsäure-C1-C4-alkylester-Copolymerisat
CR - Polychloropren
IR - Polyisopren
SBR - Styrol/Butadien-Copolymerisate mit Styrolgehalten von 1 - 60, vorzugsweise 20-50 Gew-%
IIR - Isobutylen/Isopren-Copolymerisate
NBR - Butadien/Acrylnitril-Copolymerisate mit Acrylnitrilgehalten von 5-60, vorzugsweise 10-50 Gew.-%
HNBR - teilhydrierter oder vollständig hydrierter NBR-Kautschuk
EPDM - Ethylen/Propylen/Dien-Copolymerisate
SIBR - Styrol-Isopren-Butadien Kautschuk
ENR - Epoxidierter Naturkautschuk
SNBR - Arcylnitril-Styrol/Butadien KautschukHNBR - Hydrierter Arcylnitril/Butadien Kautschuk
XNBR - Carboxylisierter Arcylnitril/Butadien Kautschuk
HXNBR - Hydrierter carboxylisierter Arcylnitril/Butadien Kautschuk.

In der alternativen Ausführungsform enthalten die erfindungsgemäßen Kautschukmischungen außer den Naturkautschuken noch einen oder mehrere unpolare Synthesekautschuke, vorzugsweise ausgewählt aus der Gruppe bestehend aus, SBR, BR, IR, SIBR, IIR, ENR und EPDM, besonders bevorzugt aus der Gruppe bestehend aus SBR, BR, IIR und EPDM, ganz besonders bevorzugt BR und/oder SBR, wobei der Gesamtgehalt an diesen unpolaren Kautschuken in der Kautschukmischung im Allgemeinen 10 bis 90 phr, vorzugsweise 20 bis 80 phr und besonders bevorzugt 30 bis 60 phr beträgt.

Die erfindungsgemäßen Kautschukmischungen können einen oder mehrere **Füllstoffe** enthalten. Prinzipiell eigenen sich alle aus dem Stand der Technik für diesen Zweck bekannten Füllstoffe, wobei die aktiven oder verstärkenden Füllstoffe bevorzugt sind.

Die erfindungsgemäßen Kautschukmischungen enthalten im Allgemeinen 0,1 bis 200 phr, vorzugsweise 20 bis 160 phr und besonders bevorzugt 25 bis 140 phr mindestens einen Füllstoff.

Bevorzugt enthalten die erfindungsgemäßen Kautschukmischungen mindestens einen hydroxylgruppenhaltigen oxidischen Füllstoff und/oder mindestens einen Ruß

Im Allgemeinen beträgt der Gehalt an hydroxylgruppenhaltigen oxidischen Füllstoffen in den erfindungsgemäßen Kautschukmischungen 0,1 bis 200 phr, vorzugsweise 20 bis 160 phr, besonders bevorzugt 25 bis 140 phr und ganz besonders bevorzugt 30 bis 120 phr.

Als hydroxylgruppenhaltige oxidische Füllstoffe eignen sich bevorzugt solche aus der Reihe der
- Kieselsäuren, mit einer spezifischen Oberfläche (BET) von 5 bis 1000, vorzugsweise 20 bis 400 m²/g und mit Primärteilchengrößen von 100 bis 400 nm, wobei die Kieselsäuren gegebenenfalls auch als Mischoxide mit anderen Metalloxiden, wie AI-, Mg-, Ca-, Ba-, Zn-, Zr-, Ti-oxiden vorliegen,
- synthetischen Silikate, wie Aluminiumsilikat, Erdalkalisilikate wie Magnesiumsilikat oder Calciumsilikat, mit spezifischen Oberflächen (BET) von 20 bis 400 m²/g und Primärteilchengrößen von 10 bis 400 nm
   und
- natürlichen Silikate, wie Kaolin und andere natürliche vorkommende Kieselsäuren, sowie Mischungen davon.

Bei den in den erfindungsgemäßen Kautschukmischungen enthaltenen hydroxylgruppenhaltigen oxidischen Füllstoffen aus der Reihe der Kieselsäuren handelt es sich bevorzugt um solche die z.B. durch Fällung von Lösungen von Silikaten oder Flammenhydrolyse von Siliciumhalogeniden hergestellt werden können.

Bevorzugt enthalten die erfindungsgemäßen Kautschukmischungen mindestens einen hydroxylgruppenhaltigen oxidischen Füllstoff aus der Reihe der Kieselsäuren mit einer spezifischen Oberfläche (BET) im Bereich von 20 bis 400 m²/g in einer Menge von 0,1 bis 200 phr, bevorzugt 20 bis 160 phr , besonders bevorzugt von 25 bis 140 phr, ganz besonders bevorzugt 30 - 120 phr.

Alle Angaben zur BET beziehen sich auf die spezifische Oberfläche gemessen nach DIN 66131. Die Angaben zur Primärteilchengröße beziehen sich auf mittels Rasterelektronenmikroskop ermittelte Werte.

Die erfindungsgemäßen Kautschukmischungen können als Füllstoff weiterhin mindestens einen **Ruß** enthalten.

Bevorzugt enthalten die erfindungsgemäßen Kautschukmischungen mindestens einen Ruß in einer Menge von 0,1 bis 200 phr, bevorzugt 20 bis 160 phr, besonders bevorzugt 25 bis 140 phr, ganz besonders bevorzugt 30 bis 120 phr.

Erfindungsgemäß bevorzugt sind Ruße die nach dem Flammruß-, Furnace- oder Gasrußverfahren erhältlich sind und die eine spezifische Oberfläche (BET) im Bereich von 20 bis 200 m²/g besitzen, wie z.B. SAF-, ISAF-, IISAF-, HAF-, FEF- oder GPF-Ruße. Bevorzugt enthalten die erfindungsgemäßen Kautschukmischungen mindestens einen Ruß mit einer spezifische Oberfläche (BET) im Bereich von 20 bis 200 m²/g .

Besonders bevorzugt enthalten die erfindungsgemäßen Kautschukmischungen als Füllstoffe mindestens einen der oben genannten Ruße und mindestens eine der oben genannten Kieselsäuren.

Die Gesamtmenge an Ruß und kieselsäurebasierenden Füllstoffen in der erfindungsgemäßen Kautschukmischung beträgt vorzugsweise 40 bis 320 phr, besonders bevorzugt 50 bis 280 phr und ganz besonders bevorzugt 60 bis 240 phr.

Die erfindungsgemäßen Kautschukmischungen können einen oder mehrere **Vernetzer** enthalten.

Vorzugsweise enthalten die erfindungsgemäßen Kautschukmischungen mindestens einen Vernetzer aus der Reihe Schwefel und Schwefelspender sowie der Metalloxide wie z.B. Magnesiumoxid und/oder Zinkoxid.

Schwefel kann in elementarer löslicher oder unlöslicher Form eingesetzt werden.

Besonders bevorzugt enthalten die erfindungsgemäßen Kautschukmischungen mindestens einen Schwefelspender und/oder Schwefel, insbesondere Schwefel.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), Tetramethylthiuramdisulfid (TMTD) und Tetrabenzylthiuramdisulfid (TBzTD) in Frage.

Ganz besonders bevorzugt enthalten die erfindungsgemäßen Kautschukmischungen als Schwefelspender Tetrabenzylthiuramdisulfid (TBzTD).

Die erfindungsgemäßen Kautschukmischungen enthalten im Allgemeinen 0,1 bis 20 phr, vorzugsweise 0,5 bis 10 phr und besonders bevorzugt von 1,0 bis 8 phr an mindestens einem der genannten Vernetzer.

Die erfindungsgemäßen Kautschukmischungen können einen oder mehrere **Vulkanisationsbeschleuniger** enthalten.

Bevorzugt enthalten die erfindungsgemäßen Kautschukmischungen mindestens einen Vulkanisationsbeschleuniger, besonders bevorzugt aus der Gruppe der Mercaptobenzthiazole, Thiocarbamate, Dithiocarbamate, Thiurame, Thiazole, Sulfenamide, Thiazolsulfenamide, Xanthogenate, bi- oder polycyclische Amine, Thiophosphate, Dithiophosphate, Caprolactame, Thioharnstoffderivate, Guanidine, cyclischen Disulfane sowie Amine, insbesondere Zink-diamindiisocyanat, Hexamethylentetramin, 1,3-Bis(citraconimidomethyl)benzol und ganz besonders bevorzugt aus der Gruppe der Sulfenamide, ganz besonders bevorzugt N-Cyclohexylbenzothiaz olsulfenamid (CAS-Nr.: 95-33-0).

Die erfindungsgemäßen Kautschukmischungen enthalten im Allgemeinen 0,1 bis 20 phr, bevorzugt 0,5 bis 10 phr und besonders bevorzugt 1,0 bis 5 phr an mindestens einem der genannten Vulkanisationsbeschleuniger.

Bevorzugt enthalten die erfindungsgemäßen Kautschukmischungen mindestens einen Vernetzer und mindestens einen Vulkanisationsbeschleuniger.

Besonders bevorzugt enthalten die erfindungsgemäßen Kautschukmischungen mindestens einen **Vernetzer** aus der Reihe Schwefel, Zinkoxid und Magnesiumoxid und mindestens einen **Vulkanisationsbeschleuniger** aus der Reihe der Merkaptobenzothiazole, Thiazolsulfenamide, Thiurame, Dithiocarbamate, Xanthogenate und Thiophosphate, besonders bevorzugt der Sulfenamide, ganz besonders bevorzugt N-Cyclohexylbenzothiazolesulfenamide (CAS-Nr.: 95-33-0).

Die Vernetzer und Vulkanisationsbeschleuniger werden bevorzugt in Mengen von 0,1 bis 15 phr, besonders bevorzugt von 2,0 bis 10 phr, jeweils bezogen auf die Summe dieser Komponenten, in die erfindungsgemäßen Kautschukmischungen eingesetzt.

Die erfindungsgemäßen Kautschukmischungen können ein oder mehrere **Verstärkungsadditive** enthalten.

Vorzugsweise enthalten die erfindungsgemäßen Kautschukmischungen mindestens ein Verstärkungsadditiv aus der Reihe der schwefelhaltigen organischen Silane, insbesondere der Alkoxysilylgruppen-haltigen schwefelhaltigen Silane und ganz besonders bevorzugt der Trialkoxysilylgruppen-haltigen schwefelhaltigen organischen Silane.

Besonders bevorzugt enthalten die erfindungsgemäßen Kautschukmischungen ein oder mehrere schwefelhaltige Silane aus der Reihe Bis-(triethoxysilylpropyl)-tetrasulfan, Bis-(triethoxysilylpropyl -disulfan und 3-(Triethoxysilyl)-1-propanthiol. Die erfindungsgemäßen Kautschukmischungen enthalten im Allgemeinen 0,1 bis 20 phr, vorzugsweise 0,5 bis 15 phr und besonders bevorzugt 1,0 bis 10 phr an mindestens einem Verstärkungsadditiv.

Flüssige Schwefelhaltige Silane können zur besseren Dosierbarkeit und/oder Dispergierbarkeit auf einem Träger aufgezogen werden (dry liquid). Der Gehalt an schwefelhaltigen Silanen in diesen "dry liquids" liegt vorzugsweise zwischen 30 und 70 Gew.-Teilen, bevorzugt 40 und 60 Gew.-Teilen je 100 Gew.-Teile dry liquid.

Die erfindungsgemäßen Kautschukmischungen können weiterhin ein oder mehrere **Kautschukhilfsmittel** enthalten. Als Kautschukhilfsmittel kommen beispielsweise Alterungsschutzmittel, Haftmittel Wärmestabilisatoren, Lichtschutzmittel, Flammschutzmittel, Verarbeitungshilfsmittel, Schlagzähfestigkeitsverbesserer, Weichmacher, Tackifier, Treibmittel, Farbstoffe, Pigmente, Wachse, Streckmittel, organische Säuren, Verzögerer, Metalloxide und Aktivatoren, insbesondere Triethanolamin, Polyethylenglykol, Hexantriol und Reversionsschutzmittel in Frage.

Diese Kautschukhilfsmittel können den erfindungsgemäßen Kautschukmischungen in den für diese Hilfsmittel üblichen Mengen, die sich auch nach dem Verwendungszweck der daraus hergestellten Vulkanisate richten, zugesetzt werden. Übliche Mengen sind beispielsweise 0,1 bis 30 phr.

Die erfindungsgemäßen Kautschukmischungen können außer dem N,N'-Dicyclohexyl-p-phenylendiamin noch ein oder mehrere weitere Alterungsschutzmittel enthalten. Als solche geeignet sind aminische Alterungsschutzmittel wie z. B. Mischungen aus Diaryl-p-phenylendiaminen (DTPD), octyliertes Diphenylamin (ODPA), Phenyl-α-naphthylamin (PAN), Phenyl-ß-naphthylamin (PBN), vorzugsweise solche auf Phenylendiaminbasis, z. B. N-Isopropyl-N'-phenyl-p-phenylendiamin, N-1,3-Dimethylbutyl-N'-Phenyl-p-phenylendiamin (6PPD), N-1,4-Dimethylpentyl-N'-phenyl-p-phenylendiamin (7PPD), N,N'-bis-(1,4-Dimethylpentyl)-p-phenylendiamin (77PD) sowie Phosphite wie Tris-(nonylphenyl)phosphit, polymerisiertes 2,2,4-Trimethyl-1,2-dihydrochinolin (TMQ), Methyl-2-Mercaptobenzimidazol (MMBI) und Zinkmethylmercaptobenzimidazol (ZMMBI).

Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel können die erfindungsgemäßen Kautschukmischungen alle für die Verarbeitung von Kunststoffen üblichen Gleitmittel enthalten, wie beispielsweise Kohlenwasserstoffe, wie Öle, Paraffine und PE-Wachse, Fettalkohole mit 6 bis 20 C-Atomen, Ketone, Carbonsäuren, wie Fettsäuren und Montansäuren, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Um die Entflammbarkeit zu vermindern und die Rauchentwicklung beim Verbrennen zu verringern, können die erfindungsgemäße Kautschukmischungen Flammschutzmittel enthalten. Hierfür werden beispielsweise Antimontrioxid, Phosphorsäureester, Chlorparaffin, Aluminiumhydroxid, Borverbindungen, Zinkverbindungen, Molybdäntrioxid, Ferrocen, Calciumcarbonat oder Magnesiumcarbonat verwendet.

Vor der Vernetzung können der erfindungsgemäßen Kautschukmischungen auch weitere Kunststoffe beigefügt werden, die beispielsweise als polymere Verarbeitungshilfsmittel oder Schlagzähigkeitsverbesserer wirken. Diese Kunststoffe werden bevorzugt gewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C1- bis C10-Alkoholen, wobei Polyacrylate mit gleichen oder verschiedenen Alkoholresten aus der Gruppe der C4- bis C8-Alkohole, insbesondere des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere besonders bevorzugt sind.

Bekannte Haftmittel basieren auf Resorcin, Formaldehyd und Silica, die sogenannten RFS-Direkthaftsysteme. Diese Direkthaftsysteme können in beliebiger Menge der erfindungsgemäßen Kautschukmischung zu jedem Zeitpunkt des Einmischens in die erfindungsgemäßen Kautschukmischungen, eingesetzt werden.

In Kieselsäure-basierten Kautschukmischungen, wie sie zur Reifenherstellung eingesetzt werden, wird typischerweise Diphenylguanidin (DPG) oder strukturähnliche aromatische Guanidine als Sekundärbeschleuniger eingesetzt, um die Vernetzungsgeschwindigkeit und die Mischungsviskosität innerhalb des Mischprozesses gezielt einstellen zu können. Ein sehr entscheidendes, negatives Merkmal beim Einsatz von DPG ist jedoch, dass dieses während der Vulkanisation Anilin freisetzt, das im Verdacht steht karzinogen zu sein. Nun wurde überraschender Weise gefunden, dass bei den erfindungsgemäßen Kautschukmischungen DPG durch 1,6-bis(N,N-dibenzylthiocarbamoyldithio)-hexan (Handelsname Vulcuren^{®}) vorteilhaft substituiert werden kann. Ein Ersatz von DPG durch Zweitbeschleuniger wie TBzTD (Tetrabenzylthiuramdisulfid) oder Dithiophosphate ist auch möglich.

Die vorliegende Erfindung umfasst daher auch im wesentlichen DPG-freie Kautschukmischungen.

Die erfindungsgemäßen Kautschukmischungen enthalten vorzugsweise mindestens eine Sekundärbeschleuniger aus der Reihe 1,6-bis(N,N-dibenzylthiocarbamoyldithio)-hexane (Handelsname Vulcuren^{®}),Tetrabenzylthiuramdisulfid (TBzTD) und Dithiophosphate.

Die erfindungsgemäßen Kautschukmischungen enthalten im Allgemeinen 0,1 bis 5,0 phr, bevorzugt 0,2 bis 2,5 phr an mindestens einem der genannten Sekundärbeschleuniger.

Gegenstand der vorliegenden Erfindung sind daher auch erfindungsgemäße Kautschukmischungen, die im Wesentlichen frei sind von Diphenylguanidin und/oder substituierten Diphenylguanidinen, insbesondere solche, die einen Gehalt an Diphenylguanidin und/oder substituierten Diphenylguanidinen von maximal 0,4 phr, vorzugsweise von 0,1 bis 0,2 phr, besonders bevorzugt von 0,05 bis 0,1 phr und ganz besonders bevorzugt von 0,001 bis 0,04 phr aufweisen.

Bevorzugt sind erfindungsgemäße Kautschukmischungen enthaltend
- mindestens einen Naturkautschuk,
- 20 bis 160 phr an mindestens einer Kieselsäure, insbesondere mit einer spezifischen Oberfläche (BET) von 5 bis 1000, vorzugsweise 20 bis 400 m²/g und mit Primärteilchengrößen von 100 bis 400 nm,
   und/oder
- 20 bis 160 phr an mindestens einem Ruß, insbesondere mit einer spezifische Oberfläche (BET) im Bereich von 20 bis 200 m²/g,
   und
- 0,5 bis 4,0 phr N,N'-Dicyclohexyl-p-phenylendiamin.

Besonders bevorzugt sind erfindungsgemäße Kautschukmischungen enthaltend
- mindestens einen Naturkautschuk,
- 25 bis 140 phr an mindestens einer Kieselsäure, insbesondere mit einer spezifischen Oberfläche (BET) von 5 bis 1000, vorzugsweise 20 bis 400 m²/g und mit Primärteilchengrößen von 100 bis 400 nm,
- 25 bis 140 phr an mindestens einem Ruß, insbesondere mit einer spezifische Oberfläche (BET) im Bereich von 20 bis 200 m²/g,
- 0,5 bis 20 phr an mindestens einem Vernetzer, insbesondere aus der Reihe der Schwefelspender und/oder Schwefel,
- 0,5 bis 20 phr an mindestens einem Vulkanisationsbeschleuniger, insbesondere aus der Reihe der Sulfenamide,
- 1,0 bis 20 phr an mindestens einem Verstärkungsadditive, insbesondere aus der Gruppe der schwefelhaltigen Silane
   und
- 0,5 bis 4,0 phr N,N'-Dicyclohexyl-p-phenylendiamin.

In einer alternativen Ausführungsform sind ebenfalls bevorzugt erfindungsgemäße Kautschukmischungen enthaltend
- mindestens einen Naturkautschuk,
- 5 bis 100 phr an mindestens einem synthetischen Kautschuk, insbesondere BR - Kautschuk und/oder SBR-Kautschuk,
- 20 bis 160 phr an mindestens einer Kieselsäure, insbesondere mit einer spezifischen Oberfläche (BET) von 5 bis 1000, vorzugsweise 20 bis 400 m²/g und mit Primärteilchengrößen von 100 bis 400 nm,
- 20 bis 160 phr an mindestens einem Ruß, insbesondere mit einer spezifische Oberfläche (BET) im Bereich von 20 bis 200 m²/g,
   und
- 0,5 bis 4,0 phr N,N'-Dicyclohexyl-p-phenylendiamin.

In einer alternativen Ausführungsform sind ebenfalls besonders bevorzugt erfindungsgemäße Kautschukmischungen enthaltend
- mindestens einen Naturkautschuk,
- 5 bis 100 phr an mindestens einem synthetischen Kautschuk, insbesondere BR - Kautschuk und/oder SBR-Kautschuk,
- 20 bis 160 phr an mindestens einer Kieselsäure, insbesondere mit einer spezifischen Oberfläche (BET) von 5 bis 1000, vorzugsweise 20 bis 400 m²/g und mit Primärteilchengrößen von 100 bis 400 nm,
- 20 bis 160 phr an mindestens einem Ruß, insbesondere mit einer spezifische Oberfläche (BET) im Bereich von 20 bis 200 m²/g,
- 0,5 bis 20 phr an mindestens einem Vernetzer, insbesondere aus der Reihe der Schwefelspender und/oder Schwefel,
- 0,5 bis 20 phr an mindestens einem Vulkanisationsbeschleuniger, insbesondere aus der Reihe der Sulfenamide,
- 1,0 bis 20 phr an mindestens einem Verstärkungsadditive, insbesondere aus der Gruppe der schwefelhaltigen Silane
   und
- 0,5 bis 4,0 phr N,N'-Dicyclohexyl-p-phenylendiamin.

Ein weiterer Gegenstand der vorliegenden Erfindung ist ein Verfahren zur Herstellung der erfindungsgemäßen Kautschukmischungen, dadurch gekennzeichnet dass mindestens ein Naturkautschuk und N,N'-Dicyclohexyl-p-phenylendiamin, gegebenenfalls in Gegenwart von mindestens einem synthetischen Kautschuk, gegebenenfalls mindestens einem Füllstoff, gegebenenfalls mindestens einem Vernetzer, gegebenenfalls mindestens einem Vulkanisationsbeschleuniger, gegebenenfalls mindestens einem Verstärkungsadditiv und gegebenenfalls einem oder mehreren der oben genannten Kautschukhilfsmittel in den für diese Zusatzstoffe genannten allgemeinen und bevorzugten Mengen bei einer Temperatur im Bereich von 40 bis 150°C, besonders bevorzugt von 40 bis 120°C miteinander vermischt.

Die Herstellung der erfindungsgemäßen Kautschukmischungen erfolgt in üblicher Weise in bekannten Mischaggregaten, wie Walzen, Innenmischern, nachgeschalteten Mischwalzwerken und Mischextrudern bei Scherraten von 1 bis 1000 sec⁻¹.

Üblicherweise arbeitet man in einem zweistufigen Mischprozess. Dabei werden zunächst die Füllstoffe und das N,N'-Dicyclohexyl-p-phenylendiamin sowie ggf. weitere oben genannte Zusatzstoffe in einem Innenmischer (Kneter) in den Kautschuk eingearbeitet. Mischtemperaturen im Innenmischer können Werte über 120°C erreichen. Daher werden die Vernetzer wie Schwefel, Zinkoxid und die Vulkanisationsbeschleuniger bei niedrigen Temperaturen, vorzugsweise bei 30 bis 100°C, nachgemischt, um eine Anvulkanisation zu vermeiden.

Das Nachmischen kann auf einem Walzwerk, dessen großflächige, mit Wasser temperierten Walzen eine wesentlich geringere Mischtemperatur ermöglichen, erfolgen.

Die Zugabe des N-N'-Dicyclohexyl-p-phenylendiamins kann im Prinzip zu jedem Zeitpunkt des Mischens erfolgen, vorzugsweise im ersten Schritt des Mischvorgangs bei einer Temperatur im Bereich von 40°C bis 150 °C, bevorzugt bei einer Temperatur von < 50°C.

Bevorzugt erfolgt die Zugabe des N,N'-Dicyclohexyl-p-phenylendiamins vor Zugabe des Vernetzers und des Vulkanisationsbeschleuniger, im ersten Mischschritt. Das N,N'-Dicyclohexyl-p-phenylendiamin kann sowohl in reiner Form als auch auf einen inerten, organischen oder anorganischen Träger, vorzugsweise einen Träger ausgewählt aus der Gruppe enthaltend natürliche oder synthetische Silikate, insbesondere neutrales, acides oder basisches Silica, Aluminiumoxid, Ruß oder Zinkoxid aufgezogen und/oder daran adsorbiert in den Mischprozess eingesetzt werden.

Die erfindungsgemäßen Kautschukmischungen und daraus hergestellten Kautschukvulkanisate können sowohl in Zink-freien als auch in Zink-haltigen Kautschukvulkanisaten vorteilhaft eingesetzt werden.

Die vorliegende Erfindung betrifft weiterhin ein Verfahren zur Herstellung von Kautschukvulkanisaten indem man eine erfindungsgemäße Kautschukmischung bei Massetemperaturen von 150 bis 200 °C, bevorzugt bei 160 bis 180 °C erhitzt. Das Verfahren zur Herstellung der erfindungsgemäßen Kautschukvulkanisate kann in einem weiten Druckbereich durchgeführt werden, bevorzugt wird es bei einem Druck im Bereich von 10 bis 200 bar durchgeführt.

Weiterer Gegenstand der vorliegenden Erfindung sind Kautschukvulkanisate die erhältlich sind durch Vulkanisation einer erfindungsgemäßen Kautschukmischung.

Die erfindungsgemäßen Kautschukvulkanisate weisen insbesondere bei Anwendung in Reifen die Vorteile eines hervorragenden Eigenschaftsprofils und einen unerwartet niedrigen Rollwiderstand auf.

Weiterer Gegenstand der vorliegenden Erfindung sind Haftmischungen enthaltend eine erfindungsgemäße Kautschukmischung und mindestens ein Haftmittel.

Die erfindungsgemäßen Haftmischungen enthalten vorzugsweise mindestens ein Haftmittel basierend auf Resorcin, Formaldehyd und Kieselsäure.

Kombinationen aus Resorcin, Formaldehyd und Kieselsäure (Silica) sind als sogenannte RFS- Direkthaftsysteme aus dem Stand der Technik bekannt. Die erfindungsgemäßen Haftmischungen können diese Direkthaftsysteme in beliebiger Menge enthalten.

Die erfindungsgemäßen Haftmischungen können hergestellt werden in bekannter Weise durch Mischen einer erfindungsgemäßen Kautschukmischung mit mindestens einem Haftmittel basierend auf Resorcin, Formaldehyd und Kieselsäure.

In den Haftmitteln kann das Formaldehyd in Form von Formaldehyd-Spendern vorliegen. Als Formaldehyd-Spender eignen sich neben Hexamethylentetramin auch Methylolaminderivate.

Den erfindungsgemäßen Haftmischungen können zur Haftverbesserung ein oder mehrere, zur Kunstharzbildung befähigten Komponenten wie Phenol und/oder Amine und/oder Aldehyde oder Aldehyde abspaltende Verbindungen zugesetzt werden.

Die erfindungsgemäßen Kautschukvulkanisate eignen sich zur Herstellung von Formkörpern aller Art wie z.B. Reifenbauteilen, technischen Gummiartikeln wie Dämpfungselementen, Walzenbelägen, Belägen von Förderbändern, Riemen, Spinnkopsen, Dichtungen, Golfballkernen, Schuhsohlen, insbesondere eignen sie sich zur Herstellung von Reifen und Reifenteilen, wie Reifenlaufflächen, Subtreads, Karkassen Seitenwänden von Reifen, verstärkten Seitenwänden für Notlaufreifen und Apexmischungen. Reifenlaufflächen schließen dabei auch Laufflächen von Sommer-, Winter- und All-Seasons-Reifen sowie Laufflächen von PKW- und LKW-Reifen ein.

Gegenstand der vorliegenden Erfindung sind Formteile, insbesondere Reifen und Reifenteile enthaltend ein erfindungsgemäßes Kautschukvulkanisat.

Weiterhin Gegenstand der vorliegenden Erfindung ist die Verwendung von N,N'-Dicyclohexyl-p-phenylendiamin als Alterungsschutzmittel für Vulkanisate auf Basis von Naturkautschuk.

Die Erfindung soll anhand der folgenden Beispiele erläutert werden, ohne diese jedoch darauf zu beschränken.

### Ausführungsbeispiele

### Liste der Einsatzstoffe, Abkürzungen und Hersteller

| Handelsname | Erläuterung | Hersteller/Vertrieb |
|---|---|---|
| TSR / RSS 3 (vormastiziert auf DEFO-Härte 1000) | Naturkautschuk (NR) | Weber & Schaer GmbH&Co |
| CORAX^{®} N 220 | Ruß | Degussa-Evonik GmbH |
| VIVATEC 500 | Prozess-Öl | Hansen & Rosenthal |
| EDENOR^{®} C 18 98 MY | Stearinsäure | Cognis Deutschland GmbH |
| ZINKOXYD AKTIV^{®} | Zinkoxid | Lanxess Deutschland GmbH |
| VULKACIT^{®} CZ/C | N-Cyclohexyl-2-benzothiazol-sulfenamid | Lanxess Deutschland GmbH |
| MAHLSCHWEFEL 90/95 CHANCEL | Schwefel | Solvay Deutschland GmbH |
| VULKANOX^{®} 4020/LG | N-1,3-Dimethylbutyl-N'-phenyl-p-phenylendiamin | Lanxess Deutschland GmbH |
| VULKANOX^{®} 4060 | N,N'-Dicyclohexyl-p-phenylen diamin (CAS-Nr. 4175-38-6) | Lanxess Deutschland GmbH |

### Herstellung der Kautschukvulkanisate

Es wurden die Kautschukmischungen der nicht erfindungsgemäßen Beispiele 1 und 2, sowie des erfindungsgemäßen Beispiels 3 gemäß den in Tabelle 1 angegeben Rezepturen hergestellt.

Die Beispiele 1 bis 3 unterscheiden sich nur darin, dass in Beispiel 1 kein Alterungsschutzmittel eingesetzt wurde, hingegen in Beispiel 2 das bekannte VULKANOX^{®} 4020/LG und in dem erfindungsgemäßen Beispiel 3 das N,N'-Dicyclohexyl-p-phenylendiamin.

Dazu wurden jeweils zunächst in einem ersten Mischschritt der Naturkautschuk in einem Kneter (GK 1,5) vorgelegt und die Additive CORAX^{®} N 220, VIVATEC 500, EDENOR^{®} C 18 98 MY und gemäß Beispiel 2 das Alterungsschutzmittel VULKANOX^{®} 4020/LG und gemäß Beispiel 3 das N,N'-Dicyclohexyl-p-phenylendiamin bei einer Temperatur von 110°C und ca. 40 Umdrehungen pro Sekunde gemischt, und anschließend in einem zweiten Mischschritt die so hergestellten Kautschukmischungen jeweils auf eine temperierte Walze gegeben und die weiteren Additve ZINKOXYD AKTIV^{®}, MAHLSCHWEFEL 90/95 CHANCEL und VULKACIT^{®} CZ/C hinzugegeben und in die Kautschukmischungen eingearbeitet. Die Walzentemperatur betrug 40°C.

Die so hergestellten Kautschukmischungen wurden anschließend bei 150°C ausvulkanisiert und zu Prüfplatten von ca. einem Zentimeter Dicke gewalzt.

Diese Prüfplatten wurden für die anschließenden anwendungstechnischen Prüfungen wie unten angegeben verwendet.

**Tabelle 1: Kautschuk-Rezepturen**

| Beispiel | 1 | 2 | 3 |
|---|---|---|---|
| erfindungsgemäß ja/nein | nein | nein | ja |
| Naturkautschuk TSR / RSS 3 DEFO 1000 | 100 | 100 | 100 |
| CORAX^{®} N 220 | 48 | 48 | 48 |
| VIVATEC 500 | 2,5 | 2,5 | 2,5 |
| EDENOR^{®} C 18 98 MY | 3 | 3 | 3 |
| ZINKOXYD AKTIV^{®} | 5 | 5 | 5 |
| VULKACIT^{®} CZ/C | 1,5 | 1,5 | 1,5 |
| MAHLSCHWEFEL 90/95 CHANCEL | 1,5 | 1,5 | 1,5 |
| VULKANOX^{®} 4020/LG | 0 | 1 | 0 |
| VULKANOX^{®} 4060 | 0 | 0 | 1 |

### Technische Prüfung

Die aus den Kautschukmischungen der Beispiele 1 bis 3 hergestellten Vulkanisate wurden den unten angegebenen technischen Prüfungen unterzogen. Die ermittelten Werte sind den Tabellen 2 und 3 zu entnehmen.

### Verwendetes Rheometer (Vulkameter) und Ausvulkanisationszeit

Der Vulkanisationsverlauf am MDR (moving die rheometer) und dessen analytischen Daten wurden an einem Monsanto-Rheometer MDR 2000 nach ASTM D5289-95 gemessen.

Als Ausvulkanisationszeit (t95) wird die Zeit bestimmt, bei der 95% des Kautschuks vernetzt ist. Die gewählte Temperatur betrug 150°C.

### Bestimmung der Bruchdehnung und Zugfestigkeit

Diese Messungen erfolgten nach DIN 53504 (Zugversuch, Stab S 2) nach 0, 7, 14 sowie 28 Tagen. Die Prüfstäbe wurden bei einer Temperatur von 60°C gelagert.

**Tabelle 2: Bruchdehnung und Zugfestigkeit**

| Beispiel | 1 | 2 | 3 |
|---|---|---|---|
| erfindungsgemäß ja/nein | nein | nein | ja |
| Ausvulkanisationszeit (t95) [s] | 691 | 663 | 467 |
| Bruchdehnung [%] | 401 | 427 | 477 |
| Zugfestigkeit [MPa] | 27,5 | 28,8 | 31,5 |

**Tabelle 2.1: Bruchdehnungswerte in Abhängigkeit der Zeit**

| Beispiel | 1 | 2 | 3 |
|---|---|---|---|
| Tage | Bruchdehnung | Bruchdehnung | Bruchdehnung |

| | [%] | [%] | [%] |
|---|---|---|---|
| 0d | 401 | 427 | 477 |
| 7d | 379 | 406 | 426 |
| 14d | 359 | 399 | 410 |
| 28d | 317 | 361 | 379 |

**Tabelle 2.2: Zugfestiqkeitswerte in Abhängigkeit der Zeit**

| Beispiel | 1 | 2 | 3 |
|---|---|---|---|
| Tage | Zugfestigkeit[%] | Zugfestigkeit[%] | Zugfestigkeit[%] |
| 0d | 27,5 | 28,8 | 31,5 |
| 7d | 25,9 | 28,2 | 29,5 |
| 14d | 24,7 | 28,8 | 29,1 |
| 28d | 21,3 | 26,7 | 27,5 |

### Bestimmung der Flüchtigkeit

Es wurde der Masseverlust über die Zeit bei 130°C bestimmt und in Prozent umgerechnet.

**Tabelle 3: Flüchtigkeit in Prozent bei 130°C in Abhängigkeit der Zeit**

| **Beispiel** | 2 | 3 |
|---|---|---|
| **Zeit (min)** | **Trockenmasse (%R)** | **Trockenmasse (%R)** |
| 0,0 | 100,00 | 100,00 |
| 10,0 | 99,66 | 99,22 |
| 20,0 | 99,80 | 99,73 |
| 30,0 | 99,80 | 99,93 |
| 40,0 | 99,85 | 99,91 |
| 50,0 | 99,80 | 99,91 |
| 60,0 | 99,80 | 99,91 |
| 70,0 | 99,75 | 99,91 |
| 80,0 | 99,71 | 99,84 |
| 90,0 | 99,71 | 99,84 |
| 100,0 | 99,61 | 99,84 |
| 110,0 | 99,61 | 99,84 |
| 120,0 | 99,61 | 99,78 |
| 130,0 | 99,56 | 99,78 |
| 140,0 | 99,56 | 99,71 |
| 150,0 | 99,56 | 99,71 |
| 160,0 | 99,46 | 99,64 |
| 170,0 | 99,46 | 99,64 |
| 180,0 | 99,46 | 99,64 |
| 190,0 | 99,46 | 99,64 |
| 200,0 | 99,46 | 99,64 |
| 210,0 | 99,46 | 99,64 |
| 220,0 | 99,36 | 99,64 |
| 230,0 | 99,31 | 99,64 |
| 240,0 | 99,31 | 99,57 |

### Fazit:

Überraschend wurde gefunden, dass mit der erfindungsgemäßen Kautschukmischung gemäß Beispiel 3 niedrige Ausvulkanisationszeiten (t95) und deutlich höhere Werte der Bruchdehnung und Zugfestigkeit bei einer Lagerung von 60°C über die Zeit zu erzielen sind im Vergleich zu den nicht erfindungsgemäßen Kautschukmischungen des Beispiels 1 (ohne Alterungsschutzmittel) sowie des Beispiels 2 (mit dem N-1,3-Dimethylbutyl-N'-phenyl-p-phenylendiamin (6PPD). Die erfindungsgemäße Kautschukmischung zeigte keine Stippen auf der Oberfläche, so dass von einer guten Vermischung der verwendeten Additive ausgegangen wird. Bei der Verarbeitung der erfindungsgemäßen Kautschukmischung des Beispiels 3 wurde weniger Emission als bei der Verarbeitung der nicht erfindungsgemäßen Kautschukmischung des Beispiels 2 beobachtet, wie aus den Werten in Tabelle 3 hervorgeht.

## Patentansprüche

1. Kautschukmischung, **dadurch gekennzeichnet, dass** sie mindestens einen Naturkautschuk und N,N'-Dicyclohexyl-p-phenylendiamin enthält.

2. Kautschukmischung gemäß Anspruch 1, **dadurch gekennzeichnet, dass** sie N,N'-Dicyclohexyl-p-phenylendiamin in einer Menge von 0,5 bis 4,0 phr, vorzugsweise von 0,5 bis 3,0 phr und besonders bevorzugt von 0,5 bis 2,5 phr enthält.

3. Kautschukmischung gemäß Anspruch 1 oder 2, **dadurch gekennzeichnet, dass** sie mindestens einen hydroxylgruppenhaltigen oxidischen Füllstoff in einer Menge von 0,1 bis 200 phr, vorzugsweise 20 bis 160 phr, besonders bevorzugt 25 bis 140 phr und ganz besonders bevorzugt 30 bis 120 phr enthält.

4. Kautschukmischung gemäß einem der Ansprüche 1 bis 3, **dadurch gekennzeichnet, dass** sie mindestens einen Ruß in einer Menge von 0,1 bis 200 phr, bevorzugt von 20 bis160 phr, besonders bevorzugt von 25 bis 140 phr und ganz besonders bevorzugt von 30 bis 120 phr enthält.

5. Kautschukmischung gemäß einem der Ansprüche 1 bis 4, **dadurch gekennzeichnet, dass** sie mindestens einen Vernetzer, vorzugsweise aus der Reihe Schwefel, Schwefelspender und Metalloxide enthält.

6. Kautschukmischung gemäß einem der Ansprüche 1 bis 5, **dadurch gekennzeichnet, dass** sie mindestens einen Vulkanisationsbeschleuniger, vorzugsweise aus der Gruppe der Mercaptobenzthiazole, Thiocarbamate, Dithiocarbamate, Thiurame, Thiazole, Sulfenamide, Thiazolsulfenamide, Xanthogenate, bi- oder polycyclische Amine, Thiophosphate, Dithiophosphate, Caprolactame, Thioharnstoffderivate, Guanidine, cyclischen Disulfane sowie Amine, insbesondere Zink-diamindiisocyanat, Hexamethylentetramin, 1,3-Bis(citraconimidomethyl)benzol enthält.

7. Kautschukmischung gemäß einem der Ansprüche 1 bis 6, **dadurch gekennzeichnet, dass** sie mindestens ein Verstärkungsadditiv aus der Reihe der schwefelhaltigen organischen Silane, insbesondere der Alkoxysilylgruppen-haltigen schwefelhaltigen Silane, enthält.

8. Kautschukmischung gemäß einem der Ansprüche 1 bis 7, **dadurch gekennzeichnet, dass** sie mindestens einen Sekundärbeschleuniger aus der Reihe 1,6-bis(N,N-dibenzylthiocarbamoyldithio)-hexan, Tetrabenzylthiuramdisulfid (TBzTD) und Dithiophosphate enthält.

9. Kautschukmischung gemäß einem der Ansprüche 1 bis 8, **dadurch gekennzeichnet, dass** sie einen Gehalt an Diphenylguanidin und/oder substituierten Diphenylguanidinen von maximal 0,4 phr, vorzugsweise von 0,1 bis 0,2 phr, besonders bevorzugt von 0,05 bis 0,1 phr und ganz besonders bevorzugt von 0,001 bis 0,04 phr aufweist.

10. Kautschukmischung gemäß einem der Ansprüche 1 bis 9, **dadurch gekennzeichnet, dass** sie einen oder mehrere Synthesekautschuke enthält.

11. Verwendung von N,N'-Dicyclohexyl-p-phenylendiamin als Alterungsschutzmittel für Kautschukmischungen und Kautschukvulkanisate auf Basis von Naturkautschuk.

12. Verfahren zu deren Herstellung einer Kautschukmischung gemäß einem der Ansprüche 1 bis 10, **dadurch gekennzeichnet dass** man mindestens einen Naturkautschuk und N,N'-Dicyclohexyl-p-phenylendiamin, gegebenenfalls in Gegenwart von mindestens einem synthetischen Kautschuk, gegebenenfalls mindestens einem Füllstoff, gegebenfalls mindestens einem Vernetzer, gegebenenfalls mindestens einem Vulkanisationsbeschleuniger, gegebenenfalls mindestens einem Verstärkungsadditiv und gegebenenfalls einem oder mehreren Kautschukhilfsmitteln bei einer Temperatur im Bereich von 40 bis 150°C miteinander vermischt.

13. Kautschukvulkanisat erhältlich durch Vulkanisation einer Kautschukmischung gemäß einem der Ansprüche 1 bis 10.

14. Verfahren zur Herstellung eines Kautschukvulkanisats, **dadurch gekennzeichnet, dass** man mindestens eine Kautschukmischung gemäß einem der Ansprüche 1 bis 10 auf eine Temperatur im Bereich von 150 bis 200 °C, bevorzugt von 160 bis 180 °C erhitzt.

15. Formkörper, insbesondere Reifen, Teile von Reifen oder technische Gummiartikel **dadurch gekennzeichnet, dass** sie mindestens ein Kautschukvulkanisat gemäß Anspruch 13 enthalten.

16. Haftmischungen enthaltend mindestens eine Kautschukmischung gemäß einem der Ansprüche 1 bis 10 und mindestens ein Haftmittel auf Basis von Resorcin, Formaldehyd und Kieselsäure.
